# EUROPÄISCHE PATENTANMELDUNG

(11) **EP 3 088 150 A1**
(43) Veröffentlichungstag der Anmeldung: **02.11.2016**
(21) Anmeldenummer: 15165311.0
(22) Anmeldetag: 28.04.2015
(51) Int. Cl.: B28D 7/00, G05B 19/02

(54) **ADAPTIVE GENERIERUNG VON BOHRPARAMETERN BEIM AUTOMATISIERTEN KERNBOHREN**

(71) Anmelder: HILTI Aktiengesellschaft, 9494 Schaan (LI)
(72) Erfinder: Drexl, Tobias, 86947 Weil (DE); Schmalholz, Thomas, 87600 Kaufbeuren (DE); Hartig, Andreas, 86161 Augsburg (DE); Link, Bernhard, 86986 Schwabbruck (DE); Golubovic, Goran, 86807 Buchloe (DE)
(74) Vertreter: Hilti Aktiengesellschaft Corporate Intellectual Property

(57) **Zusammenfassung**

Regelverfahren zur Verwendung eines Kernbohrsystems enthaltend eine Kernbohrmaschine und eine Vorschubeinrichtung zum Antreiben der Kernbohrmaschine entlang einer Maschinenhalteeinrichtung mit den Verfahrensschritten:
- Erfassen wenigstens eines ersten Bohrparameterwertes während des Kernbohrvorgangs;
- Festlegen des wenigstens ersten Bohrparameterwertes als Referenzwert;
- Erfassen wenigstens eines zweiten Bohrparameterwertes während des Kernbohrvorgangs;
- Vergleichen des wenigstens zweiten Bohrparameterwertes mit dem Referenzwert; und
- Auswählen einer vorbestimmten Parametereinstellung für das Kernbohrsystem, wenn der zweite Bohrparameterwert den Referenzwert um einen vorbestimmten Schwellwert über- oder unterschreitet.

Sowie eine Vorschubeinrichtung zum Antreiben einer Kernbohrmaschine entlang einer Maschinenhalteeinrichtung zur Verwendung des Verfahrens, ein Kernbohrmaschine zur Verwendung des Verfahrens als auch ein Kernbohrsystem enthaltend eine Kernbohrmaschine und eine Vorschubeinrichtung zum Antreiben der Kernbohrmaschine entlang einer Maschinenhalteeinrichtung zur Verwendung des Verfahrens.

## Beschreibung

Die vorliegende Erfindung bezieht sich auf ein Regelverfahren zur Verwendung eines Kernbohrsystems umfassend eine Kernbohrmaschine und eine Vorschubeinrichtung zum Antreiben der Kernbohrmaschine entlang einer Maschinenhalteeinrichtung.

Des Weiteren bezieht sich die Erfindung auf eine Vorschubeinrichtung zum Antreiben einer Kernbohrmaschine entlang einer Maschinenhalteeinrichtung zur Verwendung des erfindungsgemäßen Verfahrens.

Außerdem bezieht sich die Erfindung auf eine Kernbohrmaschine zur Verwendung des erfindungsgemäßen Verfahrens.

Darüber hinaus bezieht sich die Erfindung auf ein Kernbohrsystem enthaltend eine Kernbohrmaschine und eine Vorschubeinrichtung zum Antreiben der Kernbohrmaschine entlang einer Maschinenhalteeinrichtung zur Verwendung des erfindungsgemäßen Verfahrens.

Die beim Kernbohren von Gestein oder sonstigen mineralischen Werkstoffen notwendigen hohen Drehmomente und Vorschubkräfte werden üblicherweise von der Werkzeugmaschine bzw. Kernbohrmaschine gegen einen Maschinenhalteeinrichtung (sog. Maschinenständer) aufgebracht, der fest mit dem zu bearbeitenden Untergrund verbunden ist. Dabei werden die von der Werkzeugmaschine erzeugten Kräfte bzw. das erzeugte Drehmoment über einen versetzbaren, mit einem Maschinenkupplungsteil zur zentralen Befestigung der Werkzeugmaschine ausgebildeten Führungsschlitten symmetrisch auf eine Führungsschiene und weiter über eine Bodenplatte in den zu bearbeitenden Untergrund übertragen. Die für den Vorschub der Werkzeugmaschine notwendigen Kräfte werden insbesondere durch eine Vorschubeinrichtung erzeugt, welche maschinell mittels eines Antriebmotors betrieben werden können. Dieser maschinelle Antriebsmotor kann beispielsweise in elektrischer, hydraulischer oder auch pneumatischer Form ausgebildet sein.

Eine derartige Vorrichtung ist beispielsweise aus der EP 2 067 578 bekannt, wobei insbesondere eine transportable Werkzeugmaschine offenbart ist, welche als Antrieb für eine Kernbohrkrone zum Bohren von Beton und Mauerwerk dient. Die Werkzeugmaschine ist mittels einer Maschinenkupplung an einem Führungsschlitten befestigt. Der Führungsschlitten ist wiederum entlang eines vertikal oder horizontal ausgerichteten Maschinenständers verschiebbar, wodurch auch die Werkzeugmaschine mitsamt der Kernbohrkrone vertikal verschiebbar ist. Durch die Verschiebung der Werkzeugmaschine kann die von ihr angetriebene Kernbohrkrone in den bearbeitenden Untergrund eindringen und ein Loch bohren.

Beim Betreiben einer Kernbohrmaschine werden vor der Inbetriebnahme üblicherweise die Bohrparameter für den gewünschten Vorschub, d.h. die Startposition, die Vorschubgeschwindigkeit, die Endposition, die Bohrtiefe etc., manuelle über ein Terminal bzw. Display an der Vorschubeinrichtung eingestellt. Alternativ können die Parameter für den gewünschten Vorschub auch einem Signal entstammen, welches wiederum aus einem von einer Energiequelle (z.B. Steckdose) über die Vorschubeinrichtung zum Bohrgerät durchgeschleiften Netzkabel des zur Werkzeugmaschine gehöhrenden Bohrmotors generiert werden kann.

Des Weiteren werden ebenfalls die Parameter der Kernbohrmaschine, wie z.B. die Drehzahl, das Drehmoment, die anliegende Leistung, etc., vor Inbetriebnahme mittels eines entsprechenden Terminals an der Kernbohrmaschine manuell eingegeben. Die Auswahl der Parameter erfolgt häufig in Bezug auf den zu bearbeitenden Werkstoff, d.h. den zu bohrenden Untergrund.

Ein zu bearbeitendes Gestein bzw. ein mineralischer Werkstoff (z.B. Beton, Mauerwerk oder ähnliches) ist selten völlig homogen in seiner Beschaffenheit. Mit anderen Worten: die Konsistenz, Dichte und andere Eigenschaftswerte können stellenweise in dem mineralischen Werkstoff stark variieren.

Aufgrund dieser sich verändernden Eigenschaften des zu bearbeitenden Werkstoffs verläuft auch ein Kernbohrvorgang nicht absolut gleichförmig und die Bohrparameter des Kernbohrsystems bzw. der einzelnen Bestandteile unterliegen höhen Variationen bzw. Veränderungen. So erhöht sich beispielsweise die Wandreibung einer Kernbohrkrone mit zunehmender Bohrtiefe, was dazu führt, dass sich die Vorschubgeschwindigkeit der Bohrkrone in dem zu bearbeitenden Werkstoff verringert. Bei Kernbohrsystemen gemäß dem Stand der Technik wird häufig ein Abfall der Bohrvorschubgeschwindigkeit, und insbesondere wenn dieser unter einen vorbestimmten prozentualen Schwellwert fällt, mit einer Kollision der Kernbohrkrone auf ein Armierungseisen (sog. Eisentreffer) gleichgesetzt bzw. interpretiert. Viele herkömmlichen Kernbohrsysteme bzw. Kernbohrmaschinen verfügen über einen Einstellungsmodus für den Fall eines Eisentreffers. Mit Hilfe dieses Einstellungsmodus wird die Drehzahl der Kernbohrkrone entsprechend reduziert und das von der Kernbohrmaschine erzeugte Drehmoment erhöht, wodurch ein Zerspannen des Armierungseisens und ein entsprechend schnelles Fortsetzen des Bohrvorgangs ermöglicht wird.

Neben Eisentreffern kann auch ein plötzlicher Wechsel der Werkstoffbeschaffenheit, insbesondere bei einem Wechsel von Beton zu einer im Beton befindlichen Isoliermaterials-, Estrich-, Asphalt- oder besonders harten Betonschicht zu einer Aktivierung des Einstellungsmodus für den Fall eines Eisentreffers führen.

Darüber hinaus kann auch eine plötzliche Verschlechterung der Bohrkroneneigenschaft, insbesondere Abnutzungserscheinungen an den Schneideelementen der Bohrkrone, welche beispielsweise eine Verringerung der Vorschubgeschwindigkeit zur Folge haben kann, ebenfalls zu einer Aktivierung des Einstellungsmodus für den Fall eines Eisentreffers führen.

Die Aktivierung des Einstellungsmodus für den Fall eines Eisentreffers führt jedoch zu einer deutlichen Reduzierung der Vorschubgeschwindigkeit, sodass sich der gesamte Kernbohrvorgang erheblich verlängern kann. Es ist daher wünschenswert, dass der Einstellungsmodus für den Fall eines Eisentreffers wirklich nur für das Kernbohrsystem ausgewählt, wenn tatsächlich die Bohrkrone auf ein Armierungseisen in dem mineralischen Werkstoff (z.B. Beton) trifft. Wenn jedoch lediglich der mineralische Werkstoff mit zunehmender Kernbohrtiefe an Konsistenz, Härte und Dichte zunimmt, ist kein Auswählen und Aktivierung des Einstellungsmodus für den Fall eines Eisentreffers notwendig und das Kernbohrsystem kann mit einem Einstellungsmodus für einen relativ weichen mineralischen Werkstoff (d.h. reiner Beton) betrieben werden.

Es ist daher Aufgabe der vorliegenden Erfindung die vorstehend beschriebenen Probleme zu lösen und insbesondere ein Regelverfahren zur Verwendung eines Kernbohrsystems zur Verfügung zu stellen, mit dem ein möglichst schneller und effizienter Bohrvorgang erreicht werden kann. Darüber hinaus besteht die Aufgabe der vorliegenden Erfindung im Bereitstellen einer Vorschubeinrichtung zum Antreiben einer Kernbohrmaschine entlang einer Maschinenhalteeinrichtung, einer Kernbohrmaschine sowie eines Kernbohrsystems enthaltend eine Kernbohrmaschine und eine Vorschubeinrichtung zum Antreiben einer Kernbohrmaschine entlang einer Maschinenhalteeinrichtung zur Verwendung des Verfahrens.

Die Aufgabe wird im Wesentlichen durch die Merkmale der unabhängigen Ansprüche 1, 5, 6 und 7 gelöst. Vorteilhafte Weiterentwicklungen ergeben sich aus den entsprechenden Unteransprüchen.

Demnach wird ein Regelverfahren bereitgestellt zur Verwendung eines Kernbohrsystems umfassend eine Kernbohrmaschine und eine Vorschubeinrichtung zum Antreiben der Kernbohrmaschine entlang einer Maschinenhalteeinrichtung.

Erfindungsgemäss enthält das Verfahren die Schritte
- Erfassen wenigstens eines ersten Bohrparameterwertes während des Kernbohrvorgangs;
- Festlegen des wenigstens ersten Bohrparameterwertes als Referenzwert;
- Erfassen wenigstens eines zweiten Bohrparameterwertes während des Kernbohrvorgangs;
- Vergleichen des wenigstens zweiten Bohrparameterwertes mit dem Referenzwert; und
- Auswählen einer vorbestimmten Parametereinstellung für das Kernbohrsystem, wenn der zweite Bohrparameterwert den Referenzwert um einen vorbestimmten entsprechenden Schwellwert über- oder unterschreitet.

Durch dieses erfindungsgemässe Regelverfahren, der erfindungsgemässen Vorschubeinrichtung sowie der erfindungsgemässen Kernbohrmaschine können die vorstehend genannten Nachteile umgangen sowie der gesamte Kernbohrvorgang insgesamt effizienter und kürzer gestaltet werden. Insbesondere ist es durch die vorliegende Erfindung möglich, den Kernbohrvorgang effizient auf die unterschiedliche Beschaffenheit eines zu bearbeitenden Werkstoffs anzupassen und damit zu optimieren.

Gemäß einer vorteilhaften Ausführungsform der vorliegenden Erfindung kann es dienlich sein, dass das Erfassen des wenigstens ersten Bohrparameterwertes sowie das Festlegen des wenigstens ersten Bohrparameterwertes als Referenzwert in vorbestimmten zeitlichen Abständen erfolgen. Hierdurch kann die Bestimmung der Beschaffenheit bzw. Konsistenz des zu bearbeitenden Werkstoffs unabhängig von der Gesamtlänge bzw. Wegstrecke des Kernbohrvorgangs durchgeführt werden.

Entsprechend einer weiteren Ausführungsform der vorliegenden Erfindung kann es vorteilhaft sein, dass das Erfassen des wenigstens ersten Bohrparameterwertes sowie das Festlegen des wenigstens ersten Bohrparameterwertes als Referenzwert in vorbestimmten Abschnitten der Wegstrecke, welche die Kernbohrmaschine entlang der Maschinenhalteeinrichtung während des Kernbohrvorgangs zurücklegt, erfolgen. Hierdurch kann die Bestimmung der Beschaffenheit bzw. Konsistenz des zu bearbeitenden Werkstoffs unabhängig von der Vorschubgeschwindigkeit des Kernbohrwerkzeugs während des Kernbohrvorgangs durchgeführt werden.

Um eine möglichst aussagekräftige Beschreibung über die Beschaffenheit bzw. Konsistenz des zu bearbeitenden Werkstoffs zu erhalten kann es gemäß einer vorteilhaften Ausführungsform der vorliegenden Erfindung möglich sein, dass der erste und zweite Bohrparameterwert eine Motorstromstärke eines Antriebs der Kernbohrmaschine, ein von der Kernbohrmaschine erzeugtes Drehmoment, ein Drehzahlwert der Kernbohrmaschine, ein Drehzahlwert eines Bohrwerkzeugs der Kernbohrmaschine oder ein Vorschubgeschwindigkeitswert der Vorschubeinrichtung entlang der Maschinenhalteeinrichtung ist.

Darüber hinaus wird eine Vorschubeinrichtung bereitgestellt zum Antreiben einer Kernbohrmaschine entlang einer Maschinenhalteeinrichtung zur Verwendung des erfindungsgemäßen Verfahrens.

Außerdem wird eine Kernbohrmaschine bereitgestellt zur Verwendung des erfindungsgemäßen Verfahrens.

Des Weiteren wird ein Kernbohrsystem enthaltend eine Kernbohrmaschine und eine Vorschubeinrichtung zum Antreiben der Kernbohrmaschine entlang einer Maschinenhalteeinrichtung bereitgestellt zur Verwendung des erfindungsgemäßen Verfahrens.

Die Erfindung wird bezüglich vorteilhafter Ausführungsbeispiele näher erläutert, hierbei zeigt
- Fig. 1: ein erfindungsgemässes Kernbohrsystem mit einer Kernbohrmaschine, einer Vorschubeinrichtung und einer Maschinenhalteeinrichtung in einer Ausgangsposition;
- Fig. 2: das erfindungsgemässe Kernbohrsystem mit der Kernbohrmaschine, der Vorschubeinrichtung und der Maschinenhalteeinrichtung zu Beginn eines Kernbohrvorgangs in einen mineralischen Werkstoff;
- Fig. 3: das erfindungsgemässe Kernbohrsystem mit der Kernbohrmaschine, der Vorschubeinrichtung und der Maschinenhalteeinrichtung mit einer Bohrkrone in dem mineralischen Werkstoff;
- Fig. 4: das erfindungsgemässe Kernbohrsystem mit der Kernbohrmaschine, der Vorschubeinrichtung und der Maschinenhalteeinrichtung mit der Bohrkrone beim einem Auftreffen auf ein Armierungseisen in dem mineralischen Werkstoff;
- Fig. 5: das erfindungsgemässe Kernbohrsystem mit der Kernbohrmaschine, der Vorschubeinrichtung und der Maschinenhalteeinrichtung mit der Bohrkrone nach einem Zerschneiden eines Armierungseisens in dem mineralischen Werkstoff; und
- Fig. 6: ein Ablaufdiagramm des erfindungsgemäßen Regelverfahrens.

### AUSFÜHRUNGSBEISPIEL:

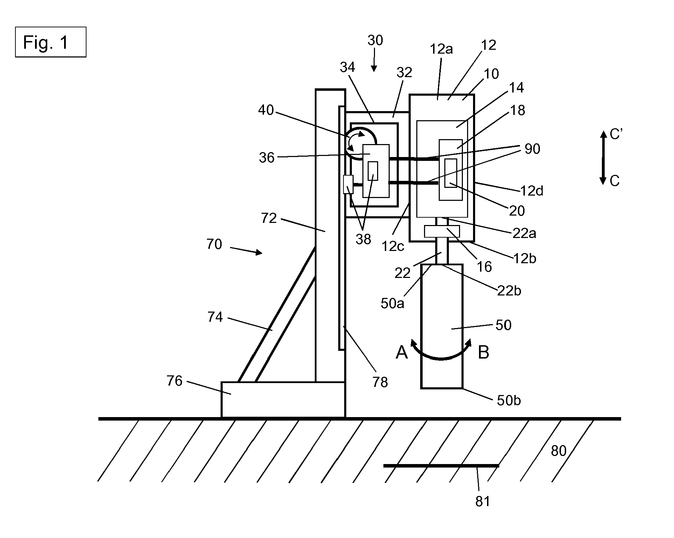

Fig. 1 zeigt ein Kernbohrsystem 1 als einen Zusammenschluss aus einer Werkzeugmaschine 10, einer Vorschubeinrichtung 30, einem Bohrwerkzeug 50 in Form eine Bohrkrone und eine Maschinenhalteeinrichtung in Form eines Maschinenständers 70.

Die Werkzeugmaschine 10 ist in Gestalt einer Kernbohrmaschine und enthält ein Gehäuse 12, einen Antrieb 14, ein Getriebe 16, eine erste Steuerungseinheit 18, Sensoren 20 und eine Antriebswelle 22. Der Antrieb 14 ist in Form eines Elektromotors gestaltet. Alternativ kann auch jede andere geeignete Antriebsart gewählt werden.

Gemäss einer speziellen Ausgestaltungsform der vorliegenden Erfindung kann der Antrieb 14 durch einen Hochfrequenzmotor gebildet sein.

Die erste Steuerungseinheit 18 ist so ausgestaltet, dass diese sämtliche Parameter der Werkzeugmaschine 10 und insbesondere sämtliche Parameter des Antriebs 14, welche von den Sensoren 20 der Werkzeugmaschine 10 gemessen werden, erfasst. Zu diesen Parametern zählt beispielsweise der eingelegte Gang des Getriebes 16, die Drehzahl des Elektromotors 14, das von dem Elektromotor 14 erzeugte Drehmoment, die Drehzahl des Bohrwerkzeugs 50, die anliegende und/oder abgegebene Leistung des Elektromotors 14, die anliegende Stromstärke des Elektromotors 14, etc.

Das Gehäuse 12 weist eine obere Seite 12a, eine untere Seite 12b, eine linke Seite 12c und eine rechte Seite 12d auf. Der Antrieb 14 befindet sich im Inneren des Gehäuses 12.

Die Antriebswelle 22 weist ein erstes Ende 22a und ein zweites Ende 22b auf. Das erste Ende 22a der Antriebswelle 22 ist so mit dem Antrieb 14 verbunden, dass der als Elektromotor ausgestaltete Antrieb 14 die Antriebswelle 22 in eine erste Drehbewegung A oder zweite Drehbewegung B versetzen kann. Das zweite Ende 22b der Antriebswelle 22 ragt an der unteren Seite 12b des Gehäuses 12 aus der Kernbohrmaschine 10 heraus. Des Weiteren weist das Bohrwerkzeug 50 in Gestalt einer zylindrischen Bohrkrone ein erstes Ende 50a und ein zweites Ende 50b auf. Das erste Ende 50a des Bohrwerkzeugs 50 ist drehfest mit dem zweiten Ende 22b der Antriebswelle 22 verbunden. Über die Antriebswelle 22 kann die Werkzeugmaschine 10 das Bohrwerkzeug 50 in die erste Drehbewegung A oder in die zweite Drehbewegung B versetzten.

Die Vorschubeinrichtung 30 enthält ein Gehäuse 32, in dem ein Vorschubantrieb 34, eine zweite Steuerungseinheit 36, Sensoren 38 sowie ein Antriebsritzel 40 positioniert sind. Die zweite Steuerungseinheit 36 ist so ausgestaltet, dass diese sämtliche Parameter der Vorschubeinrichtung 30 und insbesondere die Parameter des Vorschubantriebs 34, welche von den Sensoren 38 der Vorschubeinrichtung 30 gemessen werden, erfasst. Zu diesen gemessenen Parametern zählt beispielsweise die Vorschubgeschwindigkeit der Vorschubeinrichtung 30 zum Maschinenständer 70 bzw. Werkstück 80, die bereits zurückgelegte Wegstrecke der Vorschubeinrichtung 30 seit Beginn des Bohrvorgangs gemessen von einem zu definierenden Startpunkt (auch Nullpunkt genannt), die Position der Vorschubeinrichtung 30 entlang des Maschinenständers 70, der Drehwinkel des Vorschubantriebs 34, etc.

Darüber hinaus kann eine Vielzahl an Parametern von der Steuerungseinheit 36 der Vorschubeinrichtung 30 berechnet werden. Die Parameterberechnung erfolgt dabei anhand eines Vergleichs zwischen den von den Sensoren 38 erfassten Parameter, wie z.B. dem Drehwinkel des Antriebsritzels 40, und den vorgegebenen (d.h. voreingestellten) Parametern. Aus der Parameterberechnung kann unter anderem die Vorschubgeschwindigkeit der Vorschubeinrichtung 30 zum Maschinenständer 70, die relative und/oder absolute Position der Vorschubeinrichtung 30, die bereits zurückgelegte Wegstrecke der Vorschubeinrichtung 30 seit Beginn des Bohrvorgangs sowie der Zeitpunkt und/oder die Wegstrecke bis zum Erreichen des Anschlags des Bohrwerkzeugs 50 ermittelt werden.

Der Vorschubantrieb 34 ist dabei, wie in Fig. 1 gezeigt, gemäss einer ersten Ausgestaltung in Form eines Elektromotors ausgestaltet.

Der Vorschubantrieb 34 treibt unter Kontrolle der Steuerungseinheit 36 das Antriebsritzel 40 und damit die Vorschubeinrichtung 30 relativ zum Maschinenständer 70 an.

Die Vorschubeinrichtung 30 ist derartig ausgestaltet, dass diese an den Maschinenständer 70 montiert werden kann (wie nachfolgend beschrieben) und mit Hilfe des Antriebsritzels 40 entlang des Maschinenständers 70 in Pfeilrichtung C bewegt werden kann. Die Sensoren 38 sind in Gestalt von Winkel-, Drehwinkel-, Beschleunigungs-, Geschwindigkeits- bzw. Positionssensoren, und dabei so ausgestaltet, dass diese entweder inkrementell direkt am Vorschubantrieb 34 oder absolut entlang des Maschinenständers 70 die Beschleunigung, die Vorschubgeschwindigkeit, den Winkel, den Drehwinkel sowie die Position der Vorschubeinrichtung 30 erfassen.

Der Maschinenständer 70 enthält eine Führungsschiene 72, ein Verstrebungselement 74 sowie eine Grundplatte 76. Die Führungsschiene 72 ist so auf der Grundplatte 76 positioniert und von dem Verstrebungselement 74 gestützt, dass die Führungsschiene 72 vertikal oder im vorgegebenen Winkel ausgerichtet ist. Des Weiteren weist die Führungsschiene 72 an einer Seite eine Zahnstange 78 auf. Das Verstrebungselement 74 ist dabei optional und kann gemäss einer alternativen Ausgestaltungsform des Maschinenständers auch weggelassen sein.

Wie ebenfalls in Fig. 1 dargestellt, ist das Gehäuse 12 der Werkzeugmaschine 10 an dem Gehäuse 32 der Vorschubeinrichtung 30 befestigt.

Die Vorschubeinrichtung 30 ist so an dem Maschinenständer 70 montiert, dass das Antriebsritzel 40 der Vorschubeinrichtung 30 in die Zahnstange 78 des Maschinenständers 70 eingreift. Wenn unter Kontrolle der Steuerungseinheit 36 der Vorschubantrieb 34 das Antriebsritzel 40 in eine Drehbewegung versetzt, wird die Vorschubeinrichtung 30 reversibel entlang des Maschinenständers 70 in Pfeilrichtung C bzw. C' bewegt. Dadurch, dass die Werkzeugmaschine 10 an der Vorschubeinrichtung 30 befestigt ist, wird durch das Bewegen der Vorschubeinrichtung 30 entlang des Maschinenständers 70 in Pfeilrichtung C auch die Werkzeugmaschine 10 entlang des Maschinenständers 70 in Pfeilrichtung C bewegt. Durch dieses vertikale Bewegen der Werkzeugmaschine 10 wird das an der Werkzeugmaschine 10 befestigte Bohrwerkzeug 50 in Gestalt der zylindrischen Bohrkrone vertikal in das zu bearbeitenden Werkstück 80, d.h. in den Untergrund, befördert, wodurch ein Loch in das Werkstück 80 gebohrt wird. Der Werkstoff 80 ist dabei als mineralischer Werkstoff, insbesondere als Beton mit Armierungseisen 81 ausgestaltet.

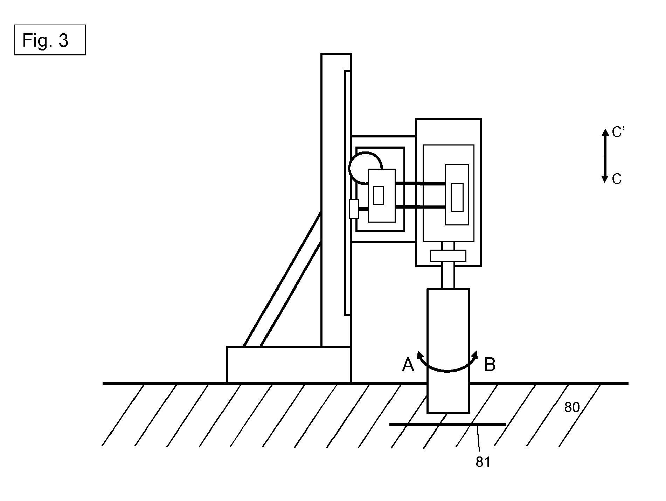

Wie bereits vorstehend beschrieben, messen die jeweiligen Sensoren 38 der Vorschubeinrichtung 30 die Parameter der Vorschubeinrichtung 30. Darüber hinaus messen die jeweiligen Sensoren 38 der Werkzeugmaschine 10 die Parameter der Werkzeugmaschine 10. Wie in Fig. 3 dargestellt, sind die Vorschubeinrichtung 30 sowie die Werkzeugmaschine 10 durch Verbindungselemente 90 derartig miteinander verbunden, dass sämtliche erfassbare Parameter der Vorschubeinrichtung 30 zu der Werkzeugmaschine 10 gesendet werden können und sämtliche erfassbare Parameter der Werkzeugmaschine 10 zu der Vorschubeinrichtung 30 gesendet werden können. Es liegt somit eine bidirektionale Kommunikation zwischen Vorschubeinrichtung 30 und der Werkzeugmaschine 10 vor. Aufgrund dieser bidirektionalen Kommunikation ist es unter anderem möglich, dass beispielsweise über einen nicht gezeigten Startschalter an der Werkzeugmaschine 10 die Vorschubeinrichtung 30 gestartet und in Betrieb genommen wird.

Darüber hinaus ist es insbesondere möglich, dass der Informationsfluss, d.h. die bidirektionale Übertragung der Parameter, zwischen der Vorschubeinrichtung 30 und der Werkzeugmaschine 10 mit Hilfe eines nicht gezeigten Stromkabels erfolgt. Gemäss einer vorteilhaften Ausgestaltungsform kann dabei die bidirektionale Übertragung der Parameter von dem Stromkabel 100 über die Werkzeugmaschine 10 zu der Vorschubeinrichtung 30 erfolgen.

### BOHRVORGANG:

Vor Beginn des Bohrvorgangs werden die für den anstehenden Bohrvorgang relevanten Parameter für die Vorschubeinrichtung 30 und Kernbohrmaschine 10 eingestellt. Diese Parameter, wie z.B. Vorschubgeschwindigkeit, Drehzahl des Antriebs 14, Drehzahl des Bohrwerkzeugs 50, Bohrkronendurchmesser, etc., stehen häufig in Zusammenhang mit dem zu bearbeitenden Werkstoff 80 und insbesondere in Bezug auf den wahrscheinlich anzunehmenden Härtegrad dieses Werkstoffs 80.

Darüber hinaus werden diese voreingestellten Parameter (sog. Soll-Parameter) in der ersten und/oder zweiten Steuerungseinheit 18, 36 erfasst bzw. gespeichert. Es ist dabei möglich, dass die Einstellung der relevanten Parameter für die Vorschubeinrichtung 30 und Kernbohrmaschine 10 lediglich anhand des gewählten Bohrkronendurchmessers getätigt wird. Die zu dem Bohrkronendurchmesser passenden Parameter, wie z.B. Drehzahl des Antriebs 14, Drehzahl des Bohrwerkzeugs 50, sind in einer Software bzw. einem Datenspeicher hinterlegt. Die Vorschubgeschwindigkeit der Vorschubeinrichtung 30 und der damit verbundenen Kernbohrmaschine 10 wird dann in Abhängigkeit von der jeweils gewählten Leistungseinstellung automatisch oder in einem separaten Schritt eingestellt.

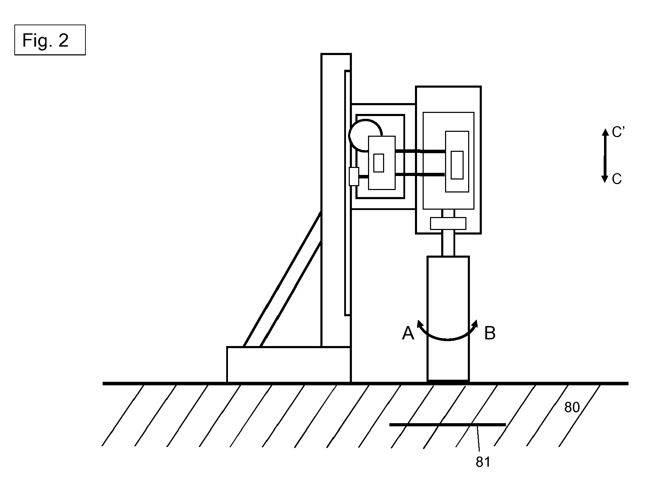

Zur Durchführung des eigentlichen Kernbohrvorgangs werden die Vorschubeinrichtung 30 sowie die Kernbohrmaschine 10 in Betrieb genommen. Das als Bohrkrone ausgestaltet Bohrwerkzeug 50 dreht sich mit einer vorgebenden Drehzahl in Drehrichtung A oder B. Die Vorschubeinrichtung 30 bewegt die Kernbohrmaschine 10 mit der Bohrkrone 50 in Richtung C auf den Werkstoff 80 zu. Sobald das zweite Ende 50b der Bohrkrone 50 die Oberfläche des Werkstoffs 80 berührt, schneiden die einzelnen Scheideelemente in den Werkstoff 80 (vgl. Fig. 2). Die Vorschubeinrichtung 30 bewegt dann die Kernbohrmaschine 10 mit der Bohrkrone 50 weiter in Richtung C und tiefer in den Werkstoff 80 hinein. Hierdurch wird ein ringförmiges Loch um einen Kern in den Werkstoff 80 geschnitten.

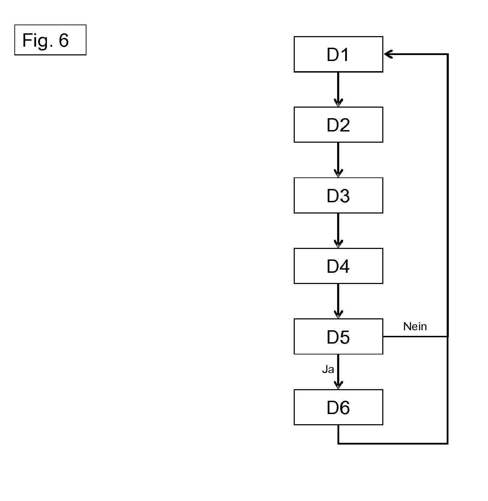

Während des Kernbohrvorgangs, wenn die Bohrkrone 50 in den Werkstoff 80 schneidet (vgl. Fig. 3), wird gemäß einem ersten Schritt **D1** des erfindungsgemäßen Regelverfahrens in regelmäßigen Abständen ein erster Bohrparameterwerte mit Hilfe der Sensoren 20, 38 erfasst (vgl. Fig. 6). Bei den regelmäßigen Abständen kann es sich um vorbestimmte zeitliche Abstände, wie z.B. Abstände in 10 Sekunden Intervallen, handeln. Es ist jedoch auch möglich, dass größer aber auch kleinere Intervalle bestimmt werden. Ebenso kann es sich bei den Abständen um vorbestimmte Abschnitte der Wegstrecke handeln, welche die Kernbohrmaschine entlang der Maschinenhalteeinrichtung während des Kernbohrvorgangs zurücklegt. Die Abstände können beispielsweise in 10 mm Intervallen erfasst werden. Es ist jedoch auch möglich, dass größer aber auch kleinere Intervalle bestimmt werden.

Bei dem ersten Bohrparameterwert kann es sich um eine Motorstromstärke des Elektromotors der Kernbohrmaschine 10, ein von der Kernbohrmaschine 10 erzeugtes Drehmoment, ein Drehzahlwert der Kernbohrmaschine 10, ein Drehzahlwert eines Bohrwerkzeugs 50 oder ein Vorschubgeschwindigkeitswert der Vorschubeinrichtung 30 entlang der Maschinenhalteeinrichtung 70 handeln.

Gemäß einem zweiten Schritt **D2** des erfindungsgemäßen Regelverfahrens wird dann der erste Bohrparameterwert als Referenzwert festgelegt. Hierzu wird der Wert des ersten Bohrparameters auf der ersten Steuerungseinheit 18 und/oder der zweiten Steuerungseinheit 36 gespeichert.

Während der erste Bohrparameterwert als Referenzwert festgelegt wird, wird der Kernbohrvorgang fortgesetzt.

Gemäß einem dritten Schritt **D3** des erfindungsgemäßen Regelverfahrens wird ein zweiter Bohrparameterwert mit Hilfe der Sensoren 20, 38 erfasst. Der zweite Bohrparameterwert entspricht dabei in seiner Art dem ersten Bohrparameterwert. Mit anderen Worten: wenn der erste Bohrparameterwert beispielsweise ein erste Drehzahlwert der Kernbohrmaschine 10 ist, so ist der zweite Bohrparameterwert ein zweiter Drehzahl der Kernbohrmaschine 10. Der erste und zweite Bohrparameterwert muss von derselben Art sein, damit die beiden Bohrparameter (z.B. Drehzahlwert der Kernbohrmaschine 10) entsprechend miteinander vergleichbar sind.

Gemäß einem vierten Schritt **D4** des erfindungsgemäßen Regelverfahrens wird der zweite Bohrparameterwert mit dem als Referenzwert hinterlegten ersten Bohrparameter verglichen. Das Vergleichen erfolgt mit Hilfe der ersten Steuerungseinheit 18 und/oder der zweiten Steuerungseinheit 36.

Auf der ersten Steuerungseinheit 18 und/oder der zweiten Steuerungseinheit 36 ist ebenso ein Schwellwert in Bezug auf den jeweils erfassten Bohrparameterwert hinterlegt bzw. gespeichert.

Gemäß einem fünften Schritt **D5** des erfindungsgemäßen Regelverfahrens wird entschieden, ob der zweite Bohrparameterwert den zuvor festgelegten Referenzwert entsprechend der eigentlichen Art des Bohrparameters über- oder ggf. unterschreitet. Falls der Referenzwert nicht über- oder ggf. unterschritten wird, folgt auf den fünften Schritt **D5** wieder der erste Schritt **D1.**

Wenn nun während des Kernbohrvorgangs der zweite Bohrparameterwert den Referenzwert um einen vorbestimmten Schwellwert überschreitet, wird gemäß einem sechsten Schritt **D6** des erfindungsgemäßen Regelverfahrens eine vorbestimmte Parametereinstellung für das Kernbohrsystem ausgewählt. Ebenso kann es der Fall sein, dass während des Kernbohrvorgangs der zweite Bohrparameterwert den Referenzwert um einen bestimmten Schwellwert unterschreitet. Auch in diesem Fall wird eine vorbestimmte Parametereinstellung für das Kernbohrsystem ausgewählt.

Das Auswählen der vorbestimmten Parametereinstellung für das Kernbohrsystem erfolgt dabei in Abhängigkeit entweder des Überschreitens oder des Unterschreitens des jeweils festgelegten Referenzwertes um einen vorbestimmten Schwellwert. Die vorbestimmte Parametereinstellung für das Kernbohrsystem wird dabei nur ausgewählt, wenn der festgelegte Referenzwert für eine erste Art von Bohrparameterwert (z.B. Motorstromstärke des Elektromotors der Kernbohrmaschine 10) überschritten oder wenn der festgelegte Referenzwert für eine zweite Art von Bohrparameterwert (z.B. Drehzahlwert eines Bohrwerkzeugs 50) unterschritten wird.

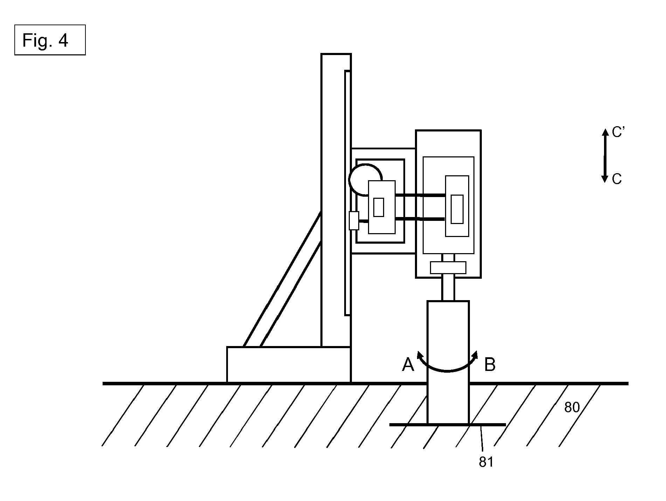

Bei der auswählbaren vorbestimmten Parametereinstellung für das Kernbohrsystem 10 handelt es sich beispielsweise um einen Einstellungsmodus des Kernbohrsystems 10 für den Fall, dass die Bohrkrone 50 in dem Werkstoff 80 auf einen sehr harten Gegenstand, beispielsweise ein Armierungseisen 81 trifft. Das Armierungseisen 81 kann auch als Bewehrungsstahl, Betonstahl oder Moniereisen bezeichnet werden. Ein derartiges Treffen der Bohrkrone auf ein Armierungseisen 81 wird als "Eisentreffer" bezeichnet. In Fig. 4 ist ein Eisentreffer durch die Bohrkrone 50 während eines Kernbohrvorgangs dargestellt.

Da das Armierungseisen 81 üblicherweise aus einem Material (z.B. Stahl) gefertigt ist, welches im Vergleich zu einem mineralischen Werkstoff (z.B. Beton) wesentlich dichter und härter ist, werden bei einem Auftreffen der Bohrkrone 50 auf ein Armierungseisen 81 einige Bohrparameterwerte des Kernbohrsystems, der Vorschubeinrichtung oder der Kernbohrmaschine teilweise schlagartig verändert. So ist beispielsweise bei gleichbleibender Leistung des Antriebs 14 die Vortriebsgeschwindigkeit der Vorschubeinrichtung 30 entlang dem Maschinenständer 70, wenn die Bohrkrone 50 in den mineralischen Werkstoff 80 (z.B. Beton) schneidet, höher als im Vergleich zu der Vortriebsgeschwindigkeit der Vorschubeinrichtung 30 entlang dem Maschinenständer 70, wenn die Bohrkrone 50 durch ein Armierungseisen 81 aus Stahl schneidet.

Wenn nun der Wert der Vortriebsgeschwindigkeit der Vorschubeinrichtung 30 den zuvor festgelegten Referenzwert für die Vortriebsgeschwindigkeit um einen vorbestimmten Schwellwert für die Vortriebsgeschwindigkeit für eine vorbestimmte Zeitdauer (ca. 2 s) unterschreitet, erkennt das Kernbohrsystem 1 hierdurch, dass die Bohrkrone 50 ein hartes Armierungseisen 81 aus Stahl schneidet und ein "Eisentreffer" im mineralischen Werkstoff 80 vorliegt.

Ebenso reduziert sich das von dem Antrieb 14 erzeugte und auf die Bohrkrone 50 übertragene Drehmoment, wenn die Bohrkrone 50 auf ein Armierungseisen 81 aus Stahl im mineralischen Werkstoff 80 trifft, da das harte Armierungseisen 81 einen höheren Widerstand für die Bohrkrone 50 bietet als der mineralische Werkstoff 80. Wenn nun das Drehmoment einen vorbestimmten Drehmomentschwellwert für eine vorbestimmte Zeitdauer (z.B. ca. 2 s) unterschreitet, erkennt das Kernbohrsystem 1 hierdurch, dass die Bohrkrone 50 ein hartes Armierungseisen 81 aus Stahl schneidet und ein "Eisentreffer" im mineralischen Werkstoff 80 vorliegt.

Gleichfalls reduziert sich der Drehzahlwert des Antriebs 14, wenn die Bohrkrone 50 auf ein Armierungseisen 81 aus Stahl im mineralischen Werkstoff 80 trifft, da das harte Armierungseisen 81 einen höheren Widerstand für die Bohrkrone 50 bietet als der mineralische Werkstoff 80. Wenn nun der Drehzahlwert des Antriebs 14 einen vorbestimmten Drehzahlschwellwert für eine vorbestimmte Zeitdauer (ca. 2 s) unterschreitet, erkennt das Kernbohrsystem 1 hierdurch, dass die Bohrkrone 50 ein hartes Armierungseisen 81 aus Stahl schneidet und ein "Eisentreffer" im mineralischen Werkstoff 80 vorliegt.

Als Reaktion hierauf wird die entsprechend vorbestimmte Parametereinstellung, d.h. der Einstellungsmodus für den Fall eines Eisentreffers ausgewählt und eingestellt. Bei dem Einstellungsmodus für den Fall eines Eisentreffers wird die Drehzahl der Bohrkrone 50 reduziert sowie das von dem Antrieb 14 erzeugte und auf die Bohrkrone 14 übertragene Drehmoment entsprechend erhöht. Hierdurch kann das Armierungseisen 81 besser zerschnitten und der Kernbohrvorgang insgesamt schneller sowie effizienter fortgesetzt werden.

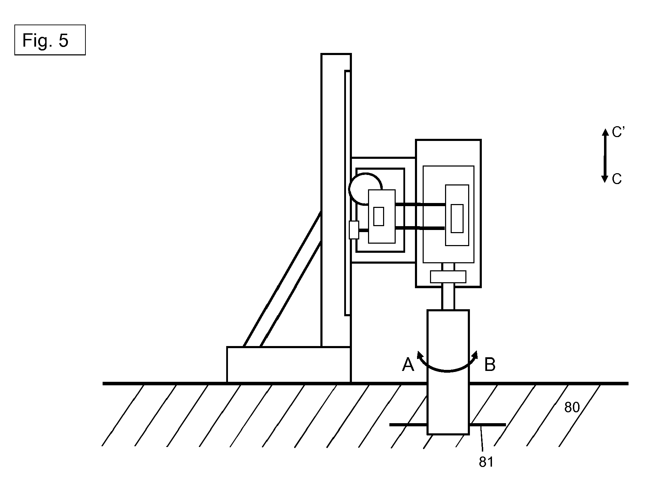

Wenn, wie in Fig. 5 dargestellt, das Armierungseisen 81 zerschnitten ist und die Bohrkrone 50 wieder den mineralischen Werkstoff 80 zerschneidet, verändern sich wiederum einige Bohrparameter. So erhöht sich beispielsweise bei gleichbleibender Leistung des Antriebs 14 der Drehzahlwert der Bohrkrone 50 beim Zerschneiden des mineralischen Werkstoffs 80 im Vergleich zum Drehzahlwert der Bohrkrone 50 beim Zerschneiden des Armierungseisens 81.

Wenn nun für den ersten Bohrparameterwert der niedrige Drehzahlwert der Bohrkrone 50 beim Zerschneiden des Armierungseisens 81 als Referenzwert festgelegt war und der zweite Bohrparameterwert ein höherer Drehzahlwert der Bohrkrone 50 beim Zerschneiden des mineralischen Werkstoffs 80 ist, der einen vorbestimmten Schwellwert für die Drehzahl der Bohrkrone überschreitet, so wird für das Kernbohrsystem eine vorbestimmte Parametereinstellung gewählt, die für das Zerschneiden eines mineralischen Werkstoffs 80 geeignet ist. Hierzu wird beispielsweise das von dem Antrieb 14 erzeugte und auf die Bohrkrone 14 übertragene Drehmoment entsprechend reduziert.

Da der mineralische Werkstoff 80, wie z.B. Beton, mit zunehmender Tiefe in Richtung C immer härter und dichter werden kann und vermieden werden soll, dass ab einem bestimmten Härtegrad der mineralische Werkstoff 80 von dem Kernbohrsystem für Armierungseisen gehalten wird, wodurch automatisch eine Einstellungsmodus für den Fall eines Eisentreffers für das Kernbohrsystem ausgewählt, wird regelmäßig während des gesamten Kernbohrvorgangs ein erster Bohrparameterwert als Referenz festgelegt und mit einem zweiten Bohrparameterwert verglichen. Hierdurch kann dem Effekt einer stetig steigernden Konsistenz, Härte und Dichte in dem zu bearbeitenden mineralischen Werkstoff entgegengewirkt werden und damit effektiv zwischen mineralischen Werkstoff und einem metallischen Werkstoff (z.B. Armierungseisen) unterscheiden werden. Hierdurch kann der gesamte Kernbohrvorgang schneller und effizienter durchgeführt werden.

## Patentansprüche

1. Regelverfahren zur Verwendung eines Kernbohrsystems (1) enthaltend eine Kernbohrmaschine (10) und eine Vorschubeinrichtung (30) zum Antreiben der Kernbohrmaschine (10) entlang einer Maschinenhalteeinrichtung (70),
**gekennzeichnet durch** die folgenden Verfahrensschritte
- Erfassen wenigstens eines ersten Bohrparameterwertes während des Kernbohrvorgangs;
- Festlegen des wenigstens ersten Bohrparameterwertes als Referenzwert;
- Erfassen wenigstens eines zweiten Bohrparameterwertes während des Kernbohrvorgangs;
- Vergleichen des wenigstens zweiten Bohrparameterwertes mit dem Referenzwert; und
- Auswählen einer vorbestimmten Parametereinstellung für das Kernbohrsystem (1), wenn der zweite Bohrparameterwert den Referenzwert um einen vorbestimmten entsprechenden Schwellwert über- oder unterschreitet.

2. Verfahren nach Anspruch 1,
wobei das Erfassen des wenigstens ersten Bohrparameterwertes sowie das Festlegen des wenigstens ersten Bohrparameterwertes als Referenzwert in vorbestimmten zeitlichen Abständen erfolgen.

3. Verfahren nach Anspruch 1 oder 2,
wobei das Erfassen des wenigstens ersten Bohrparameterwertes sowie das Festlegen des wenigstens ersten Bohrparameterwertes als Referenzwert in vorbestimmten Abschnitten der Wegstrecke, welche die Kernbohrmaschine (10) entlang der Maschinenhalteeinrichtung (70) während des Kernbohrvorgangs zurücklegt, erfolgen.

4. Verfahren nach wenigstens einem der Ansprüche 1 bis 3,
wobei der erste und zweite Bohrparameterwert eine Motorstromstärke eines Antriebs (14) der Kernbohrmaschine (10), ein von der Kernbohrmaschine (10) erzeugtes Drehmoment, ein Drehzahlwert der Kernbohrmaschine (10), ein Drehzahlwert eines Bohrwerkzeugs (50) der Kernbohrmaschine (10) oder ein Vorschubgeschwindigkeitswert der Vorschubeinrichtung (30) entlang der Maschinenhalteeinrichtung (70) ist.

5. Vorschubeinrichtung zum Antreiben einer Kernbohrmaschine (10) entlang einer Maschinenhalteeinrichtung (70) zur Verwendung des Verfahrens nach wenigstens einem der Ansprüche 1 bis 4.

6. Kernbohrmaschine (10) zur Verwendung des Verfahrens nach wenigstens einem der Ansprüche 1 bis 4.

7. Kernbohrsystem (1) enthaltend eine Kernbohrmaschine (10) und eine Vorschubeinrichtung (70) zum Antreiben der Kernbohrmaschine (10) entlang einer Maschinenhalteeinrichtung (70) zur Verwendung des Verfahrens nach wenigstens einem der Ansprüche 1 bis 4.
